# EUROPEAN PATENT APPLICATION

(11) **EP 4 572 436 A1**
(43) Date of publication of application: **18.06.2025**
(21) Application number: 23851935.9
(22) Date of filing: 10.08.2023
(51) Int. Cl.: H04W 56/00

(54) **METHOD PERFORMED BY USER EQUIPMENT AND USER EQUIPMENT**

(30) Priority: 11.08.2022 CN 202210964848
(71) Applicant: Sharp Kabushiki Kaisha, Sakai City, Osaka 590-8522 (JP)
(72) Inventor: LIU, Renmao, Shanghai 201206 (CN); LUO, Chao, Shanghai 201206 (CN); MA, Xiaojun, Shanghai 201206 (CN)
(74) Representative: Müller Hoffmann & Partner
(86) International application number: PCT/CN2023/112213
(87) International publication number: WO 2024/032714

(57) **Abstract**

The present invention provides a method performed by a user equipment (UE), and a user equipment. The method performed by a user equipment includes: a user equipment sending a random access preamble PRACH preamble on bandwidth of a target cell, according to downlink control information (DCI) on a primary cell, the target cell being a serving cell or a non-serving cell of the user equipment; and the user equipment receiving, on the primary cell, information of uplink timing synchronization with the target cell.

## Description

### TECHNICAL FIELD

The present invention relates to the technical field of wireless communications, and in particular to a method performed by user equipment, and corresponding user equipment.

### BACKGROUND ART

The instruction in this section facilitates a better understanding of various aspects of the present invention. Accordingly, the statements in this section are to be read in this light, and are not to be understood as admissions about what is prior art and what is not prior art.

In a 5G system, when a terminal moves from a coverage area of a cell to a coverage area of another cell, a serving cell needs to be changed at a certain time. The existing serving cell change procedure requires a PCell or PSCell change performed by reconfiguration with sync triggered by RRC, which involves resetting of L2 and L1, resulting in a long delay, a long service interruption time, etc. To reduce a delay in a related mobility procedure, a variety of methods may be used. For example, several cells may be configured as handover candidate cells for a terminal, and uplink synchronization with some or all of the cells may be achieved before the handover according to an instruction of a network. That is, a TA value used by the terminal when performing uplink transmission in the candidate cells is acquired. These candidate cells may be serving cells configured for the terminal, or may not be serving cells configured for the terminal; therefore, related service procedures need to be triggered and completed according to different network deployment situations, so as to implement related functions and improve network efficiency.

### SUMMARY OF THE INVENTION

In order to address at least a portion of the aforementioned issues, provided in the present invention are a method performed by a user equipment, and a user equipment. The method comprises: a user equipment sending a random access preamble PRACH preamble on a bandwidth of a target cell, according to downlink control information (DCI) on a primary cell, the target cell being a serving cell or a non-serving cell of the user equipment; and the user equipment receiving, on the primary cell, information of uplink timing synchronization with the target cell.

Preferably, the a user equipment sending a PRACH preamble on bandwidth of a target cell according to downlink control information (DCI) comprises: according to an indication value in the DCI, determining that the target cell is a cell in which the DCI is received or a cell in a candidate cell list configured by a higher layer and used for handover.

Preferably, the user equipment receiving, on the primary cell, information of uplink timing synchronization with the target cell comprises: the user equipment receiving the timing synchronization information in a time window,
The time window starting at a time T after the PRACH preamble is sent, and the time T being determined by the terminal according to an indication in the downlink control information (DCI) on the primary cell.

Preferably, the information of the uplink timing synchronization of the user equipment with the target cell is a MAC-CE command sent by the primary cell, and the MAC-CE command comprises an absolute timing adjustment amount of the uplink timing synchronization of the terminal with the target cell, and information of a timing group TAG to which the target cell belongs.

Preferably, the user equipment determines, according to whether the MAC-CE command is received in a time window, whether a random access (RA) procedure of the user equipment on the target cell is successfully completed or not successfully completed.

Preferably, the information of the uplink timing synchronization of the user equipment with the target cell is a MAC RAR command sent by the primary cell.

Preferably, the user equipment receives the MAC RAR command in a time window, and determines that a random access (RA) procedure of the user equipment on the target cell is successfully completed.

Furthermore, according to the present invention, provided is user equipment, comprising: a processor; and a memory, having instructions stored therein, wherein the instructions, when run by the processor, perform the above method.

According to the present invention, uplink timing alignment of a terminal with several candidate cells can be achieved, thereby reducing service interruption time in a handover procedure, reducing handover delay, and improving network efficiency.

### BRIEF DESCRIPTION OF THE DRAWINGS

The above and other features of the present invention will be more apparent from the following detailed description in combination with the accompanying drawings, in which:
FIG. 1 shows a method performed by a user equipment (UE) related to an embodiment of the present invention.
FIG. 2 shows a schematic structural diagram of a fixed-length MAC CE for acquiring timing information related to Embodiment 2 of the present invention.
FIG. 3 shows a schematic structural diagram of a variable-length MAC CE for acquiring timing information related to Embodiment 2 of the present invention.
FIG. 4 shows a schematic structural diagram of a MAC RAR for acquiring timing information related to Embodiment 3 of the present invention.
FIG. 5 is a simplified structural block diagram of a user equipment (UE) involved in the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. These embodiments are merely provided as examples to convey the scope of the subject matter to those skilled in the art. In addition, detailed descriptions of well-known technologies not directly related to the present invention are omitted for the sake of brevity, in order to avoid obscuring the understanding of the present invention.

Typically, all terms used herein will be interpreted according to the ordinary meaning thereof in the related technical field unless different meanings are clearly presented and/or implied in the context where the terms are used. Unless explicitly stated otherwise, all references to an element, device, assembly, component, step, etc., shall be publicly interpreted as referring to at least one instance of the element, device, assembly, component, step, etc. The steps of any method disclosed herein do not need to be performed in the exact order disclosed unless one step has to be explicitly described as being after or before another step and/or one step has to be after or before another step as implied. In appropriate cases, any feature of any embodiment disclosed herein is applicable to any other embodiment. Likewise, any advantage of any embodiment is applicable to any other embodiment, and vice versa.

In the following description, a 5G/NR mobile communication system and later evolved versions thereof are used as exemplary application environments to describe a plurality of embodiments according to the present invention in detail. However, it is to be noted that the present invention is not limited to the following embodiments, but is applicable to many other wireless communication systems, such as a post-5G communication system, pre-5G 4G and 3G mobile communication systems, and an 802.11 wireless network.

Some terms involved in the present invention are described below. If not specifically indicated, the terms involved in the present invention use the definitions herein. The terms given in the present invention may vary in LTE, LTE-Advanced, LTE-Advanced Pro, NR, and subsequent or other communication systems, but unified terms are used in the present invention. When applied to a specific system, the terms may be replaced with terms used in the associated system.
UE: User Equipment
gNB: NR base station
FR1: Frequency range 1, as defined in TS 38.104
FR2: Frequency range 2, as defined in TS 38.104
BWP: Bandwidth Part
SFN: System Frame Number
OFDM: Orthogonal Frequency Division Multiplexing
CP: Cyclic Prefix
TA: Timing Advance
SCS: Sub-Carrier Spacing
RB: Resource Block
RE: Resource Element
CRB: Common Resource Block
PRB: Physical Resource Block
VRB: Virtual Resource Block
REG: Resource Element Group
CCE: Control Channel Element
EPRE: Energy Per Resource Element
TDD: Time Division Duplexing
FDD: Frequency Division Duplexing
CSI: Channel State Information
DCI: Downlink Control Information
MCS: Modulation and Coding Scheme
CRC: Cyclic Redundancy Check
SFI: Slot Format Indication
QCL: Quasi Co-Location
HARQ: Hybrid Automatic Repeat Request
CORESET: Control Resource Set
MIB: Master Information Block
SIB: System Information Block
SIBl: System Information Block Type 1
SSB: SS/PBCH Block (Synchronization Signal/Physical Broadcast Channel Block)
PSS: Primary Synchronization Signal
SSS: Secondary Synchronization Signal
SRS: Sounding Reference Signal
DMRS: Demodulation Reference Signal
CSI-RS: Channel State Information Reference Signal
TRS: Tracking Reference Signal
RACH: Random-Access Channel
PBCH: Physical Broadcast Channel
PUCCH: Physical Uplink Control Channel
PUSCH: Physical Uplink Shared Channel
PRACH: Physical Random-Access Channel
PDSCH: Physical Downlink Shared Channel
PDCCH: Physical Downlink Control Channel
UL-SCH: Uplink Shared Channel
DL-SCH: Downlink Shared Channel
NZP-CSI-RS: Not-Zero-Power CSI-RS
C-RNTI: Cell Radio Network Temporary Identifier
P-RNTI: Paging RNTI
RA-RNTI: Random Access RNTI
CS-RNTI: Configured Scheduling RNTI
SI-RNTI: System Information RNTI
TC-RNTI: Temporary C-RNTI
RAR: Random Access Response
CSS: Common Search Space
RIV: Resource Indication Value
MCG: Master Cell Group
SCG: Secondary Cell Group
PCell: Primary Cell

The following is a description of technologies associated with the solution of the present invention. Unless otherwise specified, the same terms in the specific embodiments have the same meanings as in the associated technologies.

It is worth pointing out that user, user equipment, terminal device and terminal involved in the description of the present invention have the same meaning, and UE may also be used herein to represent user equipment, which will not be specifically differentiated or defined hereinafter. Similarly, network devices are devices that communicate with a user equipment, and include, but are not limited to, a base station device, a gNB, an eNB, a wireless AP, a wireless relay, a terminal having a relay capability, etc., and will not be specifically differentiated or defined hereinafter. Herein, descriptions may be provided by using a base station as a form of a network device that is implemented, and in a specific implementation, other network device forms may be easily used for replacement.

In order to compensate for transmission delays between different terminals and a cell in a base station, so that uplink signals of terminals arriving at the cell can be aligned to reduce uplink interference, uplink timing alignment of the terminals with the cell needs to be achieved before the terminals perform uplink service data transmission. In an NR network, uplink timing alignment may be achieved by means of a method in which a terminal sends a random access preamble (PRACH preamble) to a cell. The terminal sends a PRACH preamble signal to the cell according to an instruction of a higher layer or DCI. The cell may estimate, according to the preamble signal, a timing adjustment amount, i.e., a TA value, required for the terminal to achieve uplink timing alignment. The network sends the TA value to the terminal by means of signaling. The terminal uses the TA value to adjust the uplink transmission timing to achieve the uplink timing alignment, and applies same to a related uplink transmission procedure.

One or more MAC entities present in the terminal are used to manage a related service procedure. For example, a plurality of TA groups (TAGs) are configured in a MAC entity of the terminal, each TAG being associated with one or more cells, and uplink timing alignment of these cells using the same TA value. Each TAG may use a timer to maintain validity of an uplink timing parameter in the TAG. An absolute or relative TA adjustment amount may be used in the network to adjust timing alignment of uplink transmission related to the TAG. When the terminal receives a TA adjustment command of a certain TAG, the terminal updates the related TA value of the related TAG, and starts or restarts the related timer. When the TAG has no related TA value, or when the timer has expired, the terminal does not send a signal other than PRACH or MsgA to the cell associated with the TAG.

The terminal needs to select an appropriate time-frequency resource location to send the PRACH preamble signal on an uplink bandwidth. In the network, a cell may configure several starting symbol positions in a period of an uplink bandwidth, the starting symbol positions being used by the terminal to determine one or more starting positions of a PRACH preamble in the period. The cell may further configure a multiplexing coefficient in the frequency domain of the uplink bandwidth, and determine several consecutive bandwidth positions on the bandwidth for transmission of the PRACH preamble. In this way, the terminal can determine, within the period of the uplink bandwidth of the cell, several time-domain and frequency-domain location determination occasions, which are referred to as several PRACH occasions. The terminal maps an SSB index of the cell to these PRACH occasions according to a value N of an ssb-perRACH-Occasion parameter configured by a higher-layer parameter, the value of N being one of [1/8, 1/4, 1/2, 1, 2, 4, 8, 16]. When configured such that N > 1, N SSB indexes correspond to the same PRACH occasion. When configured such that N <1, one SSB index may correspond to 1/N PRACH occasions. The terminal may further acquire some other parameters of the uplink bandwidth of the cell by means of a higher layer, such as a starting position of the bandwidth, a relative starting position of the PRACH in the frequency domain, etc., which are used to determine a PRACH preamble transmission resource. In this way, the terminal can determine, according to an SSB index indicated by the network, or according to an index of a certain SSB for which an SS-RSRP measurement value is greater than a threshold, one or more PRACH occasions within the period of the uplink bandwidth of the cell which can be used for PRACH preamble transmission.

In the present invention, a terminal sends a PRACH preamble according to an instruction of a network and receives related TA command information, so as to establish uplink timing alignment with specific cells, thereby reducing a handover delay of the terminal between these cells, and improving system efficiency.

Embodiments of the present invention are described in detail below.

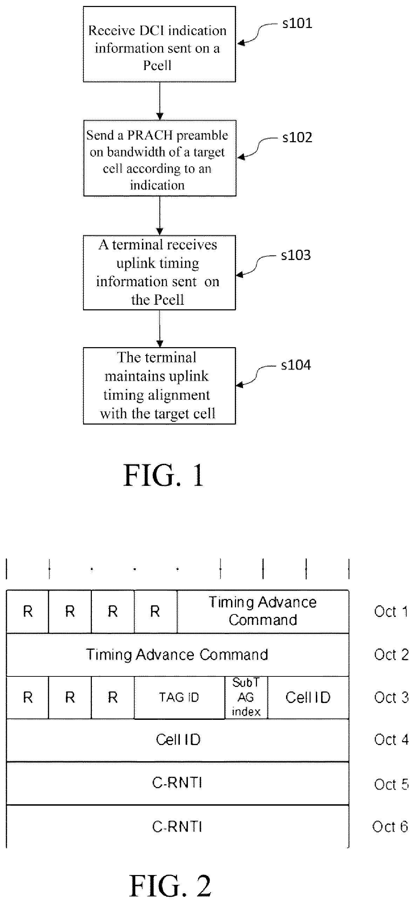

FIG. 1 is a flowchart of a method for determining that a terminal and a target candidate cell achieve uplink timing alignment according to an embodiment of the present invention.

As shown in FIG. 1, in step S101, a terminal receives DCI indication information sent on a PCell.

In step S102, the terminal sends a PRACH preamble on bandwidth of a target cell according to an indication of DCI. The above steps will be described in detail in Embodiment 1.

In step S103, the terminal receives a TA command related to the target cell on the Pcell. The terminal may start to detect related TA command information at a time T after the PRACH preamble is sent.

In step S104, the terminal completes and maintains uplink timing alignment with the target cell according to the TA command information. The above steps will be described in detail in Embodiments 2, 3 and 4.

### [Embodiment 1]

In order to reduce delay or data transmission interruption time or the like in a cell handover procedure, a network may configure several candidate cells for a terminal as target cells for handover of the terminal. These cells may be serving cells of the terminal or non-serving cells of the terminal. When the terminal supports dual connectivity (DC), these cells may belong to an MCG, may belong to an SCG, or may not belong to an MCG or an SCG. In order to reduce handover delay, the terminal may establish uplink alignment with a specified cell according to an instruction of the network, so as to reduce time required for a handover. The terminal sends a PRACH preamble on bandwidth of the specified cell according to the instruction of the network, so as to acquire an uplink timing parameter of the target cell and the terminal, and receive a corresponding TA command.

In an optional embodiment, the terminal determines sending of the preamble according to an indication of a PDCCH order detected on a primary cell (PCell). The terminal searches a downlink active BWP of the PCell for a DCI format 1_0 with CRC scrambled by C-RNTI. When a frequency domain resource assignment field of the detected DCI format 1_0 is all 1, the terminal determines that the DCI is a PDCCH order, and the terminal, according to content of indication information in the DCI, determines a parameter for PRACH preamble transmission.

Optionally, the DCI indication information includes a preamble index that is used to indicate an index of a preamble used in the target cell by the terminal. The network uses a non-zero preamble index to indicate sending of a preamble by the terminal on a candidate cell.

Optionally, the DCI indication information includes an SSB index used to indicate an SSB index corresponding to a PRACH occasion used by the terminal to perform PRACH preamble transmission, and the terminal determines time-frequency resources available for preamble transmission according to the SSB index and a configuration related to the target cell.

Optionally, the DCI indication information includes a PRACH mask index used to indicate, when one SSB index corresponds to a plurality of PRACH occasions, which PRACH occasions among several PRACH occasions selected by the terminal according to the SSB index are available for preamble transmission. For example, the PRACH mask index indicates a pattern according to a predetermined table. For example, 0 indicates that all PRACH occasions are available for a currently indicated preamble transmission, 1 indicating that the first PRACH occasion is available for a currently indicated preamble transmission, and so on.

Optionally, the DCI indication information includes a target cell indication value, and the terminal determines, according to the indication value, that the target cell indicated by the PDCCH order is the cell where the PDCCH is located, or a cell in the candidate cell set. As a specific example, the target cell indication value is represented by a number n of bits in the DCI. When the n bits are all 0, the terminal sends a PRACH preamble in the cell where the PDCCH is located. When the n bits are not all 0, the terminal determines that a value represented by the n bits is an index of a cell in candidate cells.

Optionally, n is a fixed value. For example, if a maximum number of candidate cells allowed in the network is X, n = ceil(log2(X + 1)), ceil being a ceiling operation, and log2 being a base-2 logarithm operation. As a specific example, if the maximum number of candidate cells that can be configured for the terminal is defined by the network as 15, n = 4. That is, the terminal determines that four bits are used as the target cell indication value in the DCI.

Optionally, the terminal determines the value of n according to the number of configured candidate cells. For example, if the number of candidate cells configured for the terminal by the network is X, n = ceil (log2(X + 1)), ceil being a ceiling operation, and log2 being a base-2 logarithm operation. As a specific example, if the number of candidate cells configured for the terminal by the network is 15, n = 4. That is, the terminal determines that four bits are used as the target cell indication value in the DCI.

Optionally, the DCI includes SSB index validity indication information, used by the terminal to determine whether to select a PRACH occasion according to the SSB index indicated in the DCI. For example, the validity indication information is represented by one bit in the DCI. If the indication information is 0, the terminal selects a PRACH occasion according to the SSB index in the DCI. When the indication information is 1, the terminal selects, according to an SSB-RSPR measurement value of the target cell, an SSB index of an SSB exceeding a threshold, and selects a corresponding PRACH occasion.

Optionally, when the network configures a cell parameter for the terminal, the target cell is configured to support 2-TA, that is, the cell supports two independent TAs. The indication information further includes one bit representing an index value indicating which TA index of the target cell corresponds to the command. When the target cell is not configured with 2-TA, the bit in the DCI is a reserved value.

Optionally, the DCI further includes a time parameter indicating that the terminal detects a TA command, the time parameter being used to determine a location of a window for detecting the TA command.

Optionally, when the terminal is configured with dual connectivity (DC), the PCell is an spCell.

The terminal may determine, according to the indication of the PDCCH order, a target cell ID and parameters such as a PRACH que preamble index and a PRACH occasion, and the terminal may determine a resource and a parameter for preamble transmission according to a higher layer configuration parameter of the target cell, and send the PRACH preamble on the PRACH occasion of the target cell.

### [Embodiment 2]

According to an indication of a network, a terminal sends a PRACH preamble on uplink bandwidth of a target cell. The target cell detects the preamble, estimates a timing adjustment value related to the terminal, and sends a TA command to the terminal in a certain manner. The terminal determines a timing deviation from the target cell according to the TA command, and achieves uplink timing alignment of the terminal with the cell.

The target cell may be a serving cell of the terminal or a non-serving cell of the terminal, and the terminal may not support simultaneous reception on multiple cells/carriers, so that receiving the TA command on these cells may result in service interruption of the terminal on a PCell. In addition, collision caused when another terminal performs sending on the PCell using the same preamble index needs to be considered.

Optionally, the terminal receives, on downlink bandwidth of the PCell, a TA command related to uplink timing alignment of the terminal with a candidate cell. The terminal detects a TA command MAC CE transmitted by a PDSCH on the Pcell, and determines a timing adjustment parameter for uplink timing alignment with the candidate cell.

Optionally, the TA command MAC CE is transmitted by a PDSCH scheduled by DCI with CRC scrambled by C-RNTI.

Optionally, the TA command MAC CE includes an absolute timing adjustment value. The absolute timing adjustment value is a numerical value represented by 12 bits.

Optionally, the TA command MAC CE includes a cell ID. The terminal determines, according to the cell ID, a cell corresponding to the absolute timing adjustment value. For example, the cell ID may be a physical cell ID represented by 10 bits, or a cell index of the candidate cell.

Optionally, the TA command MAC CE includes TAG information used by the terminal to maintain uplink timing alignment information of the candidate cell. For example, the terminal maintains several TAGs for candidate cells, and the several TAGs are identified by TAG IDs. Each TAG corresponds to several related cell IDs, and a timer is used to maintain validity of uplink alignment of the terminal with the cell corresponding to the TAG. When the terminal receives a candidate cell TA command MAC CE, the terminal reads the TAG ID. If a TAG list of the terminal does not include the TAG corresponding to the TAG ID, the terminal adds the TAG, and restarts a timer thereof.

Optionally, when the terminal determines that the network has configured 2-TA for the indicated cell, the TA command MAC-CE further includes a subTAG index, used to indicate which one of two TAs used by the TAG of the cell corresponds to a timing adjustment value in the TA.

Optionally, the TA command MAC-CE has a fixed length, and an example of the MAC-CE is shown in FIG. 2. Each MAC-CE includes a TA indication, a TAG ID, and a cell ID of a cell. The MAC-CE further includes a C-RNTI of a user, which is used by the user to check the MAC-CE. That is, when the C-RNTI is consistent with the C-RNTI of the user, the terminal applies related information in the MAC-CE; otherwise, the terminal discards the MAC-CE.

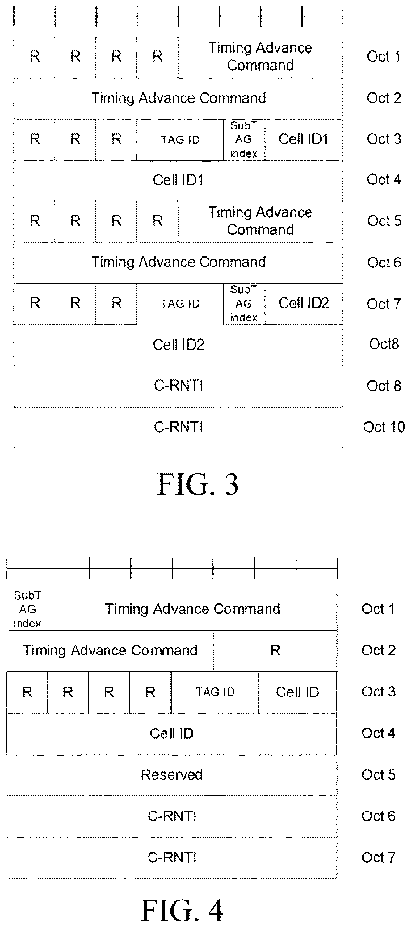

Optionally, the TA command MAC-CE has a variable length, and the MAC-CE includes TAs for one or more candidate cells. An example is shown in FIG. 3. The terminal may determine TA timing adjustment values for several TAGs in a MAC-CE according to positions and sizes of fields.

The terminal sends a PRACH preamble according to an instruction of the network and initiates a random access (RA) procedure, and the terminal needs to determine completion of the RA procedure.

Optionally, the terminal determines completion of the RA procedure according to the type of the target cell. When the target cell in DCI indication information received by the terminal is indicated to be a candidate cell, if the terminal detects, in a window after the PRACH preamble is sent, a TA command carried in a MAC-CE of a correct corresponding cell, the terminal determines that the RA procedure is successfully completed.

Optionally, if the terminal does not detect, in the window after the PRACH preamble is sent, any TA command carried in a MAC-CE of a correct corresponding cell, the terminal determines that the RA procedure is not successfully completed.

Optionally, the terminal determines completion of the related RA procedure after sending the PRACH preamble. In this way, the terminal can send a preamble to a plurality of different candidate cells, thereby achieving a better effect.

### [Embodiment 3]

According to an indication of a network, a terminal sends a PRACH preamble on uplink bandwidth of a target cell. The target cell detects the preamble, estimates a timing adjustment value related to the terminal, and sends a TA command to the terminal in a certain manner. The terminal determines a timing deviation from the target cell according to the TA command, and achieves timing alignment of the terminal with the cell.

The target cell may be a serving cell of the terminal or a non-serving cell of the terminal, and the terminal may not support simultaneous reception on multiple cells/carriers, so that receiving the TA command on these cells may result in service interruption of the terminal on a PCell.

Optionally, the terminal may receive, on the PCell, a TA command related to sending of the preamble. The terminal receives a MAC RAR in a PDSCH scheduled by DCI with CRC scrambled by RA-RNTI, and determines the TA command. In this way, an uplink timing adjustment parameter of a serving cell or a candidate cell may be received by means of a unified signaling procedure. An example of content of a MAC RAR for RA of a candidate cell is shown in FIG. 4.

Optionally, a TA command MAC CE MAC RAR includes an absolute timing adjustment value. The absolute timing adjustment value is a numerical value represented by 12 bits.

Optionally, the MAC RAR includes a cell ID. The terminal determines, according to the cell ID, a cell corresponding to the absolute timing adjustment value. For example, the cell ID may be a physical cell ID represented by 10 bits, or a cell index of the candidate cell.

Optionally, the MAC RAR includes TAG information used by the terminal to maintain uplink timing alignment information of the candidate cell. For example, the terminal maintains several TAGs for candidate cells, and the several TAGs are identified by TAG IDs. Each TAG corresponds to several related cell IDs, and a timer is used to maintain validity of uplink alignment of the terminal with the cell corresponding to the TAG. When the terminal receives a candidate cell MAC RAR, the terminal reads the TAG ID. If a TAG list of the terminal does not include the TAG corresponding to the TAG ID, the terminal adds the TAG, and restarts a timer thereof.

Optionally, when the terminal determines that the network has configured 2-TA for the indicated cell, the MAC RAR further includes a subTAG index used to indicate which one of two TAs used by the TAG of the cell corresponds to a timing adjustment value in the TA.

Optionally, when the RAR received by the terminal is related to the RA procedure of the candidate cell and the terminal has acquired a C-RNTI, a temporary C-RNTI in the content of the RAR is the C-RNTI used by the terminal. When the C-RNTI is consistent with a C-RNTI of a user, the terminal applies TA timing information in the RAR, and considers that the RAR is successfully received. Otherwise, the terminal discards the RAR, and considers that the RAR is not successfully received.

The terminal sends a PRACH preamble according to an instruction of the network and initiates a random access (RA) procedure, and the terminal needs to determine completion of the RA procedure.

Optionally, the terminal determines completion of the RA procedure according to an indication value of the target cell. When the terminal determines that the received RAR corresponds to RA for the candidate cell, and the terminal detects, in a window after the PRACH preamble is sent, a TA command carried in a RAR of a correct corresponding cell, uplink grant information in the RAR is not used, and the terminal determines that the RA procedure is successfully completed.

Optionally, the terminal does not detect, in the window after the PRACH preamble is sent, any TA command carried in a MAC-CE of a correct corresponding cell, and the terminal determines that the RA procedure is not successfully completed.

### [Embodiment 4]

A network configures several candidate cells for a terminal, so as to reduce a delay of a handover between cells or a data terminal time. The candidate cell and a primary cell (PCell) of the terminal may be different in network deployment. For example, the candidate cell and the primary cell being deployed on the same or different DUs, the cells being in a synchronized or unsynchronized state, uplink or downlink bandwidths used by different cells being in the same or different frequency bands, etc., which may result in different processing time requirements on the network and the terminal. For example, information transmission between the candidate cell and the primary cell requires a certain time, and when the candidate cell and the primary cell are deployed on the same or different DUs, the required time may also be different. As another example, when an uplink bandwidth used to send a preamble on the candidate cell does not coincide with an uplink active bandwidth of the primary cell, it takes a certain amount of time for the terminal to detect a PDCCH on a downlink bandwidth of the primary cell after sending the preamble on the bandwidth of the candidate cell.

As a specific example, when the candidate cell receives the preamble sent by the terminal, an adjustment amount TA required for uplink timing alignment of the terminal with the cell is estimated. The terminal detects related TA command information in a detection window on the PCell. For example, the terminal performs detection in the detection window to acquire a related TA command in a MAC-CE transmitted by a PDSCH scheduled by a PDCCH with CRC scrambled by C-RNTI. Alternatively, the terminal performs detection in the detection window to acquire a related TA command in a RAR transmitted by a PDSCH scheduled by a PDCCH with CRC scrambled by RA-RNTI. The terminal determines a starting point of the detection window, and the terminal starts to detect the related PDCCH at a time T after the last symbol of a PRACH occasion in which the preamble is sent.

Optionally, the terminal determines the value T according to a time parameter indication in PDCCH order DCI. The network may configure several time parameter lists for the terminal by means of higher layer signaling according to relationships between different cells and the Pcell, and a terminal capability reporting situation. The terminal selects one of them according to the indication of the DCI, to determine the time value T. As a specific example, the network configures a list including four time values by means of higher layer signaling. The network uses two bits in the DCI to indicate a minimum time between the last symbol of the PRACH occasion in which the PRACH preamble is sent by the terminal according to the DCI indication and the first symbol of the associated PDCCH used to detect the TA command. For example, when the indication in the DCI is 0, the terminal uses the first value in the configured list as the value of T, and when the indication in the DCI is 1, the terminal uses the second value in the configured list as the value of T, and so on.

Optionally, the terminal determines T1 according to the indication value of the DCI; determines T2 according to the capability of the terminal and the relationship between the uplink active BWP bandwidth of the serving cell and the BWP bandwidth in which the PRACH of the target cell is located; and determines T = max(T1, T2) according to the maximum value of T1 and T2.

Optionally, the time parameter and T are configured so that the unit thereof is an absolute time, such as milliseconds.

Optionally, the time parameter and T are configured so that the unit thereof is the number of symbols, the terminal calculating the required time on the basis of the symbol index determined according to SCS in the bandwidth in which the DCI is located.

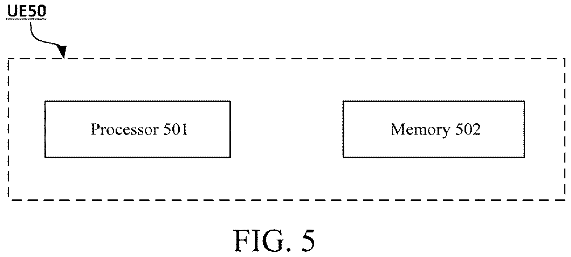

Hereinafter, FIG. 5 is used to illustrate a user equipment that can perform the method performed by a user equipment described in detail above in the present invention as a variant embodiment.

FIG. 5 shows a block diagram of a user equipment (UE) according to the present invention.

As shown in FIG. 5, a user equipment (UE) 50 includes a processor 501 and a memory 502. The processor 501 may include, for example, a microprocessor, a microcontroller, an embedded processor, and the like. The memory 502 may include, for example, a volatile memory (such as a random access memory (RAM)), a hard disk drive (HDD), a non-volatile memory (such as a flash memory), or other memories, etc. The memory 502 has program instructions stored thereon. The instructions, when run by the processor 501, can perform the method performed by the user equipment described in detail in the present invention.

The method and related equipment according to the present invention have been described above in combination with preferred embodiments. It should be understood by those skilled in the art that the method shown above is only exemplary, and the above embodiments can be combined with one another as long as no contradiction arises. The method of the present invention is not limited to the steps or sequences illustrated above. The network node and user equipment illustrated above may include more modules. For example, the network node and user equipment may further include modules that can be developed or will be developed in the future to be applied to a base station, an MME, or UE, and the like. Various identifiers shown above are only exemplary, and are not meant for limiting the present invention. The present invention is not limited to specific information elements serving as examples of these identifiers. A person skilled in the art could make various alterations and modifications according to the teachings of the illustrated embodiments.

It should be understood that the above-described embodiments of the present invention may be implemented by software, hardware, or a combination of software and hardware. For example, various components in the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

In the present application, the "base station" may refer to a mobile communication data and control exchange center having large transmission power and a wide coverage area, including functions such as resource allocation and scheduling and data reception and transmission. "User equipment" may refer to user mobile terminals, such as terminal devices that can communicate with a base station or a micro base station wirelessly, including a mobile phone, a laptop computer, and the like.

In addition, the embodiments of the present invention disclosed herein may be implemented on a computer program product. More specifically, the computer program product is a product provided with a computer-readable medium having computer program logic encoded thereon. When executed on a computing device, the computer program logic provides related operations to implement the above technical solutions of the present invention. When executed on at least one processor of a computing system, the computer program logic causes the processor to perform the operations (the method) described in the embodiments of the present invention. Such setting of the present invention is typically provided as software, codes and/or other data structures provided or encoded on the computer-readable medium, e.g., an optical medium (e.g., compact disc read-only memory (CD-ROM)), a flexible disk or a hard disk and the like, or other media such as firmware or micro codes on one or more read-only memory (ROM) or random access memory (RAM) or programmable read-only memory (PROM) chips, or a downloadable software image, a shared database and the like in one or more modules. Software or firmware or such configuration may be installed on a computing device such that one or more processors in the computing device perform the technical solutions described in the embodiments of the present invention.

In addition, each functional module or each feature of the base station device and the user equipment used in each of the above embodiments may be implemented or executed by a circuit, which is usually one or more integrated circuits. Circuits designed to execute various functions described in this description may include general-purpose processors, digital signal processors (DSPs), application-specific integrated circuits (ASICs) or general-purpose integrated circuits, field-programmable gate arrays (FPGAs) or other programmable logic devices, discrete gates or transistor logic, or discrete hardware components, or any combination of the above. The general-purpose processor may be a microprocessor, or the processor may be an existing processor, a controller, a microcontroller, or a state machine. The aforementioned general-purpose processor or each circuit may be configured by a digital circuit or may be configured by a logic circuit. Furthermore, when advanced technology capable of replacing current integrated circuits emerges due to advances in semiconductor technology, the present invention can also use integrated circuits obtained using this advanced technology.

While the present invention has been illustrated in combination with the preferred embodiments of the present invention, it will be understood by those skilled in the art that various modifications, substitutions, and alterations may be made to the present invention without departing from the spirit and scope of the present invention. Therefore, the present invention should not be limited by the above-described embodiments, but should be defined by the appended claims and their equivalents.

## Claims

1. A method performed by a user equipment (UE), comprising:
sending, by a user equipment, a random access preamble (PRACH preamble) on bandwidth of a target cell according to downlink control information (DCI) on a primary cell, the target cell being a serving cell or a non-serving cell of the user equipment; and
receiving, by the user equipment on the primary cell, information of uplink timing synchronization with the target cell.

2. The method according to claim 1, wherein
the a user equipment transmitting a PRACH preamble on bandwidth of a target cell according to downlink control information (DCI) comprises:
determining, according to an indication value in the DCI, that the target cell is a cell in which the DCI is received, or a cell in a candidate cell list configured by a higher layer and used for handover.

3. The method according to claim 1, wherein
the user equipment receiving, on the primary cell, information of uplink timing synchronization with the target cell comprises:
receiving, by the user equipment, the timing synchronization information in a time window,
the time window starting at a time T after the PRACH preamble is sent, and the time T being determined by the terminal according to an indication in the downlink control information (DCI) on the primary cell.

4. The method according to claim 1, **characterized in that**
the information of the uplink timing synchronization of the user equipment with the target cell is a MAC-CE command sent by the primary cell, and the MAC-CE command comprises an absolute timing adjustment amount for the uplink timing synchronization of the terminal with the target cell and information of a timing group TAG to which the target cell belongs.

5. The method according to claim 4, **characterized in that**
the user equipment determines, according to whether the MAC-CE command is received in a time window, whether a random access (RA) procedure of the user equipment on the target cell is successfully completed or not successfully completed.

6. The method according to claim 1, **characterized in that**
the information of the uplink timing synchronization of the user equipment with the target cell is a MAC RAR command sent by the primary cell.

7. The method according to claim 6, **characterized in that**
the user equipment receives the MAC RAR command in a time window, and determines that a random access (RA) procedure of the user equipment on the target cell is successfully completed.

8. A user equipment, comprising:
a processor; and
a memory, having instructions stored therein,
wherein the instructions, when run by the processor, perform the method according to any one of claims 1 to 7.
